# EUROPEAN PATENT APPLICATION

(11) **EP 4 609 695 A1**
(43) Date of publication of application: **03.09.2025**
(21) Application number: 25156091.8
(22) Date of filing: 05.02.2025
(51) Int. Cl.: A01D 41/127, A01D 43/073, B65G 67/22, G01S 7/48, G01S 13/86, G01S 13/88, G01S 17/34, G01S 17/42, G01S 17/58, G01S 17/88, A01D 41/12, A01D 43/08

(54) **SPILLAGE MONITORING SYSTEM FOR AN AGRICULTURAL HARVESTER UNLOADING SYSTEM**

(30) Priority: 28.02.2024 US 202463558941 P
(71) Applicant: AGCO International GmbH, 8212 Neuhausen am Rheinfall (CH)
(72) Inventor: CHRISTIANSEN, Martin Peter, 8930 Randers (DK); LAURSEN, Morten Stigaard, 8930 Randers (DK)
(74) Representative: AGCO Intellectual Property Department

(57) **Abstract**

The present invention relates to a systems using electromagnetic sensors to monitor spillage of harvested crop. The system includes an unloading conveyor (316) configured to transfer agricultural material (326) as well as one or more sensors (302, 304) configured to generate movement information associated with the agricultural material flowing out of the conveyor. A computing system, configured to predict an amount of the agricultural material (328) that is likely to flow outside of a targeted area (324) based on the movement information, and in response to the prediction, generate a signal that communicates an alert that the amount of the agricultural material is likely to flow outside of the targeted area or that controls an unloading process to change direction of the flow of the agricultural material to reduce an extent that agricultural material flows outside of the targeted area.

## Description

### TECHNICAL FIELD

The present disclosure relates to methods and systems using sensors and computing systems to monitor spillage of harvested crops that occurs during the transfer of the harvested crops.

### BACKGROUND

Harvesting operations in agriculture are prone to various inefficiencies, including the spillage of harvested materials during the transfer or unloading process. The problem arises during the transfer of these materials from the harvesting machine, via its unloading device, to a grain cart, grain truck or other receiving vehicle. Under typical circumstances, factors such as wind, uneven terrain, or improper unloading operations can cause a considerable amount of harvested material to spill onto the ground instead of landing in the intended vehicle. This spillage not only results in significant waste of agricultural resources but also increases operational costs and reduces overall productivity.

Existing agricultural harvesting systems, including forage harvesters and combine harvesters, generally feature an unloading device, such as a spout or an auger, respectively, that discharges harvested material. However, these systems often lack monitoring and control of the trajectory of the discharged material and thus cannot prevent or minimize spillage effectively. Thus, it would be advantageous to provide a system (and/or an associated method) that overcomes or at least mitigates one or more problems associated with the prior art systems and improves the ability to monitor and control the trajectory of the discharged material and thus prevent or minimize spillage.

### SUMMARY

Described herein are techniques using sensors and computing systems to monitor the spillage of harvested crops by an unloader of a harvester that occurs during the unloading of the harvested crops from the harvester. The sensors and computing include an electromagnetic detecting and ranging component. Alternatively, the sensors and computing include an image-capturing component. Or, the sensors and computing include an image-capturing component and an electromagnetic detecting and ranging component. The techniques disclosed herein provide specific technical solutions to at least overcome the technical problems mentioned in the background section or other parts of the application as well as other technical problems not described herein but recognized by those skilled in the art.

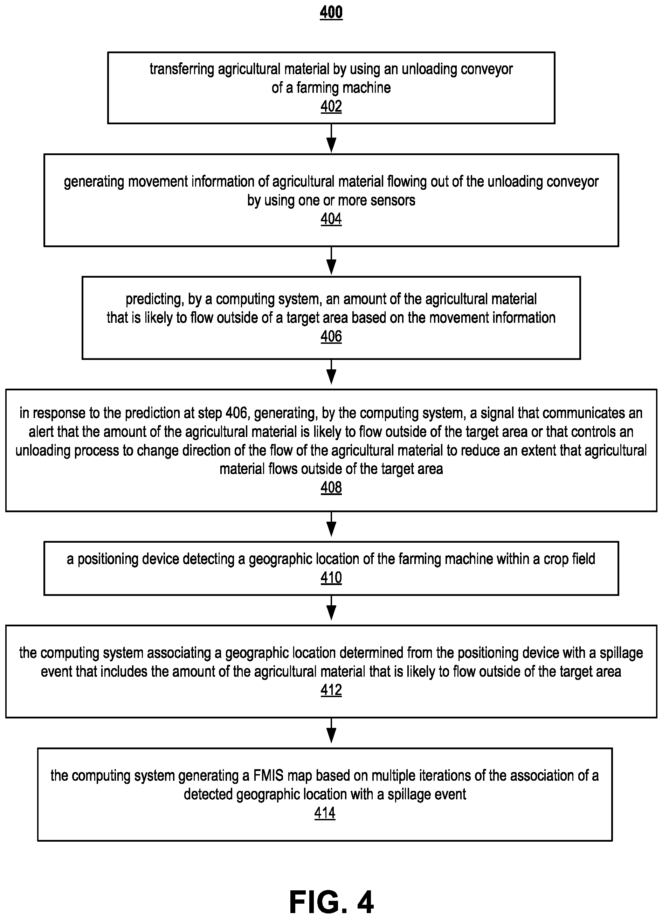

In some embodiments, disclosed herein are computerized methods using sensors and computing systems to monitor spillage of harvested crops by an unloader of a harvester that occurs during unloading of the harvested crop from the harvester (e.g., see computing system enabled steps 406 and 408 shown in FIG. 4), as well as a non-transitory computer-readable storage medium for carrying out technical operations of the computerized methods. The non-transitory computer-readable storage medium has tangibly stored thereon, or tangibly encoded thereon, computer-readable instructions that when executed by one or more devices (e.g., one or more personal computers or servers) cause at least one processor to perform a method for improved systems and methods using sensors and computing to monitor spillage by an unloader of a harvester.

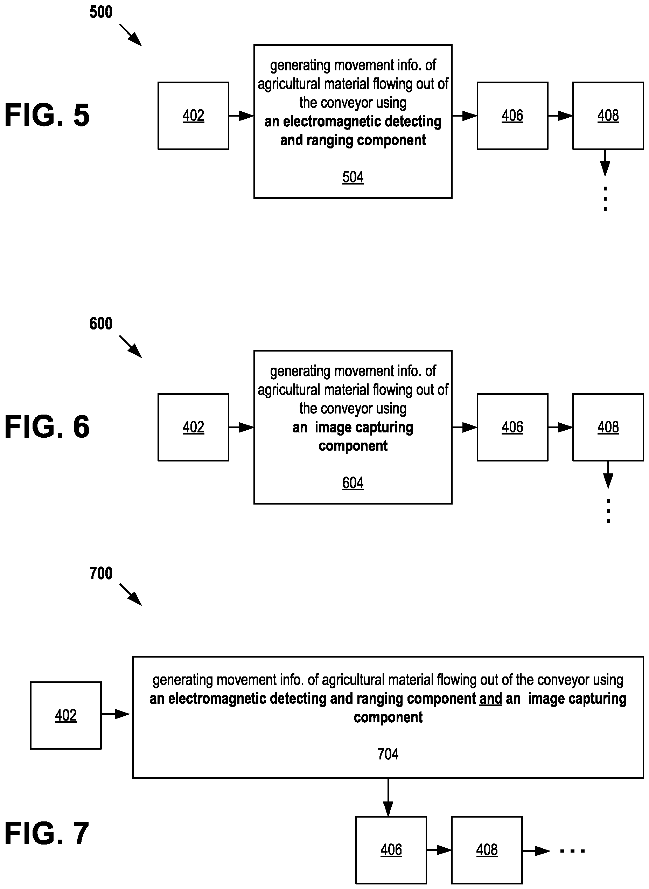

For example, some embodiments include a method using one or more sensors and computing to monitor spillage of the harvested crop by an unloader of a harvester that occurs during the unloading of the harvested crop from the harvester (e.g., see method 400 shown in FIG. 4). In some examples, the method includes transferring agricultural material by using an unloading conveyor (e.g., see step 402). The method also includes generating movement information associated with agricultural material flowing out of the unloading conveyor by using one or more sensors (e.g., see step 404). And, the method includes predicting, by a computing system, an amount of the agricultural material that is likely to flow outside of a targeted area based on the movement information (e.g., see step 406). Further, the method includes, in response to the prediction, generating, by a computing system, a signal that communicates an alert that the amount of the agricultural material is likely to flow outside of the targeted area or a signal that controls an unloading process to change the direction of the flow of the agricultural material to reduce an extent that agricultural material flows outside of the targeted area (e.g., see step 408). In some embodiments of the method, the one or more sensors include an electromagnetic detecting and ranging component (e.g., see step 504 shown in FIG. 5). Alternatively, in some embodiments, the one or more sensors include an image-capturing component (e.g., see step 604 shown in FIG. 6). Or, in some embodiments, the one or more sensors include an image-capturing component and an electromagnetic detecting and ranging component (e.g., see step 704 shown in FIG. 7).

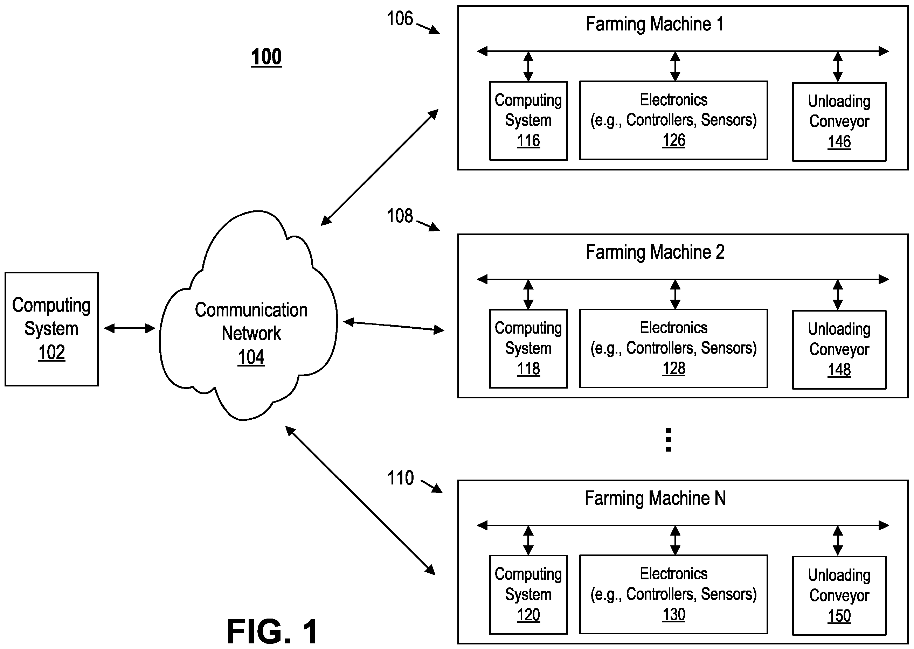

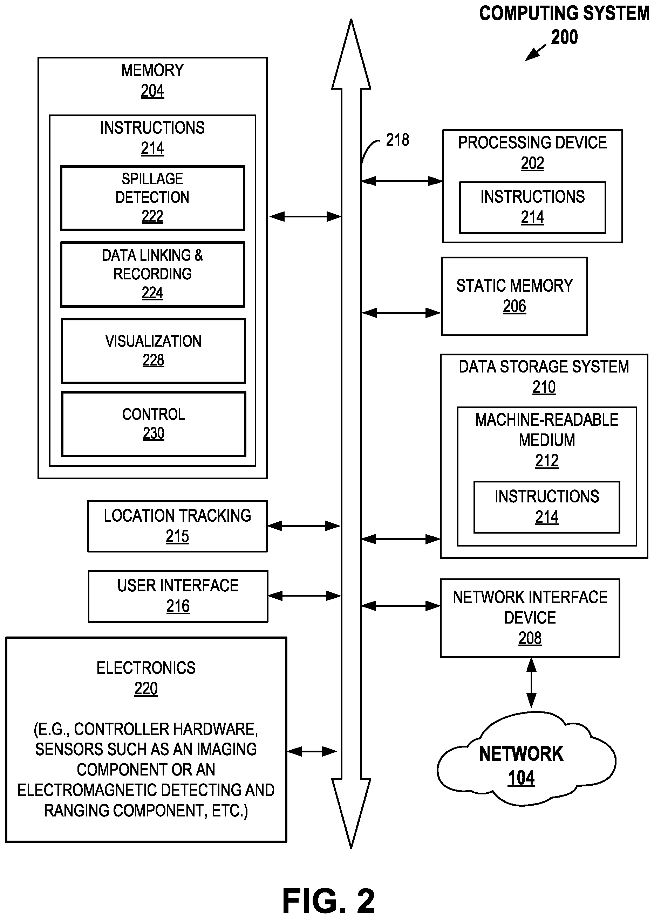

Also, there are systems disclosed herein that include an unloading conveyor configured to transfer agricultural material and one or more sensors configured to generate movement information associated with agricultural material flowing out of the unloading conveyor (e.g., see multiple instances of such systems depicted in the network 100 illustrated in FIG. 1 including conveyor 146 of farming machine 106 and electronics 126 that can include one or more sensors). Such systems can include a computing system (e.g., see any one of the computing systems shown in FIG. 1 as well as computing system 200 shown in FIG. 2). The computing system is configured to predict an amount of the agricultural material that is likely to flow outside of a targeted area based on the movement information (e.g., see spillage detection instructions 222). And, in response to the prediction of the computing system, the computing system is configured to generate a signal that communicates an alert that the amount of the agricultural material is likely to flow outside of the targeted area (e.g., see visualization instructions 228) or that controls an unloading process to change direction of the flow of the agricultural material to reduce an extent that agricultural material flows outside of the targeted area (e.g., see control instructions 230). In some embodiments of the system, the one or more sensors include an electromagnetic detecting and ranging component (e.g., see sensor module 302 or 304). Alternatively, in some embodiments, the one or more sensors include an image-capturing component (e.g., see sensor module 302 or 304). Or, in some embodiments, the one or more sensors include an image-capturing component and an electromagnetic detecting and ranging component (e.g., see sensor modules 302 and 304).

Some embodiments include a positioning device for detecting the geographic location of the harvester being tracked for spillage events (e.g., see location tracking 215 shown in FIG. 2), and in such cases, the computing system is configured to associate a geographic location determined from the positioning device with a spillage event (e.g., see data linking and recording instructions 224). In some embodiments, the computing system is configured to generate a farming management information system (FMIS) map based on multiple iterations of the association of a determined geographic location with a spillage event, and the FMIS map can include levels of spillage at different sectors in a crop field (e.g., see visualization instructions 228). In some embodiments, the FMIP map providing spillage information can be combined with a yield map or another type of map having another type of agricultural information.

These and other important aspects of the invention are described more fully in the detailed description below. The invention is not limited to the particular methods and systems described herein. Other embodiments can be used and changes to the described embodiments can be made without departing from the scope of the claims that follow the detailed description. Within the scope of this application, it should be understood that the various aspects, embodiments, examples, and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

The present disclosure will be understood more fully from the detailed description given below and from the accompanying drawings of various example embodiments of the disclosure.
FIG. 1 illustrates an example network of agricultural machines that communicate with a computing system through a communication network, in accordance with some embodiments of the present disclosure.
FIG. 2 illustrates a block diagram of example aspects of a computing system (such as one or more of the computing systems shown in FIG. 1), in accordance with some embodiments of the present disclosure.
FIG. 3 illustrates a harvester that is harvesting crop and transferring a stream of processed crop to a receiving vehicle via an unloading conveyor of an unloader of the harvester, in accordance with some embodiments of the present disclosure.
FIG. 4 illustrates a method, in accordance with some embodiments of the present disclosure.
FIG. 5 illustrates another method using an electromagnetic detecting and ranging component, in accordance with some embodiments of the present disclosure.
FIG. 6 illustrates another method using an image-capturing component, in accordance with some embodiments of the present disclosure.
FIG. 7 illustrates another method using both an image-capturing component and an electromagnetic detecting and ranging component, in accordance with some embodiments of the present disclosure.
FIG. 8 illustrates a processing pipeline for spillage detection, in accordance with some embodiments of the present disclosure.
FIG. 9 illustrates a data processing method for spillage detection that includes digital signal processing and a trained computing scheme, in accordance with some embodiments of the present disclosure.
FIG. 10 shows a perspective view of an agricultural harvester and data points collected by a LIDAR system, in accordance with some embodiments of the present disclosure.
FIG. 11 illustrates a computer-generated image of a receiving vehicle and a tractor pulling the receiving vehicle as well as material being unloaded from a harvester and an occurrence of spillage, in accordance with some embodiments of the present disclosure.
FIG. 12 illustrates a graphical user interface (GUI) for monitoring spillage, in accordance with some embodiments of the present disclosure.
FIG. 13 illustrates a map presented in a GUI for monitoring spillage and respective amounts of the spillage at different locations of a crop field, in accordance with some embodiments of the present disclosure.

### DETAILED DESCRIPTION OF EXAMPLE EMBODIMENTS

Details of example embodiments of the invention are described in the following detailed description with reference to the drawings. Although the detailed description provides reference to example embodiments, it is to be understood that the invention disclosed herein is not limited to such example embodiments. But to the contrary, the invention disclosed herein includes numerous alternatives, modifications, and equivalents as will become apparent from consideration of the following detailed description and other parts of this disclosure.

Described herein are techniques using sensors and computing systems to monitor the spillage of harvested crops by an unloader of a harvester that occurs during the unloading of the harvested crops from the harvester. The sensors and computing systems include an electromagnetic detecting and ranging component. Alternatively, the sensors and computing systems include an image-capturing component. Or, the sensors and computing systems include an image-capturing component and an electromagnetic detecting and ranging component. The techniques disclosed herein provide specific technical solutions to at least overcome the technical problems mentioned in the background section or other parts of the application as well as other technical problems not described herein but recognized by those skilled in the art.

Some example benefits of the techniques implemented through systems and methods described herein include being able to monitor the trajectory of harvested material from an unloading device to its landing point, detect and alert about spillage in real-time, record incident data with global navigation satellite system (GNSS) references, as well as facilitate cloud-based remote monitoring and data processing. Such techniques address the critical issue of spillage in agricultural harvesting, enhancing operational efficiency, reducing waste, and ultimately increasing the profitability of farming operations. To this point, harvesting operations in agriculture are prone to various inefficiencies, including the spillage of harvested materials during the unloading process. The problem arises during the transfer of these materials from the harvesting machine, via its unloading device, to a receiving trailer or similar vehicle. Under typical circumstances, factors such as wind, uneven terrain, or improper unloading operations can cause a considerable amount of harvested material to spill onto the ground instead of landing in the intended trailer. This spillage not only results in significant waste of agricultural resources but also increases operational costs and reduces overall productivity. Some example benefits of the techniques described herein as well as the corresponding methods and system is that they provide technical solutions to the aforesaid problems with spillage. Also, existing agricultural harvesting systems, including forage harvesters and combine harvesters, generally feature an unloading device-a spout or an auger, respectively-that discharges harvested material. However, these systems traditionally lack the ability to monitor and control the trajectory of the discharged material and thus cannot prevent or minimize spillage effectively. Example benefits of the techniques described herein as well as the corresponding methods and systems are that they provide ways of monitoring and controlling the trajectory of the discharged material to reduce or eliminate spillage effectively.

FIG. 1 illustrates a network 100 of farming machines (such as harvesters) that communicate with remote computing systems through a communications network 104 and that can contribute to the reduction or elimination of spillage according to some of the embodiments described herein. Specifically, FIG. 1 illustrates the network 100 including a remote computing system 102, the communications network 104, and farming machines (e.g., see farming machines 106, 108, and 110). The remote computing system (e.g., see remote computing system 102) is remote in that it is physically and geographically separated from the farming machines of the network 100. It should also be understood that the remote computing system 102 can embody multiple remote computing systems. The farming machines are shown communicating with the remote computing system 102 of the network 100 through a communications network 104. As shown in FIG. 1, the farming machines of the network 100 can each include its own computing system including electronics such as connected controllers, sensors, cameras, busses, and computers (e.g., see computing systems 116, 118, and 120, and see electronics 126, 128, and 130). A computing system of a farming machine can include a processor, memory, a communication interface, and one or more sensors that can make the farming machines individual computing devices. In the case of communications network 104 including the Internet, the farming machines of the network 100 are considered Internet of Things (IoT) devices. Also, in some embodiments, the remote computing system 102 is a part of a cloud computing system.

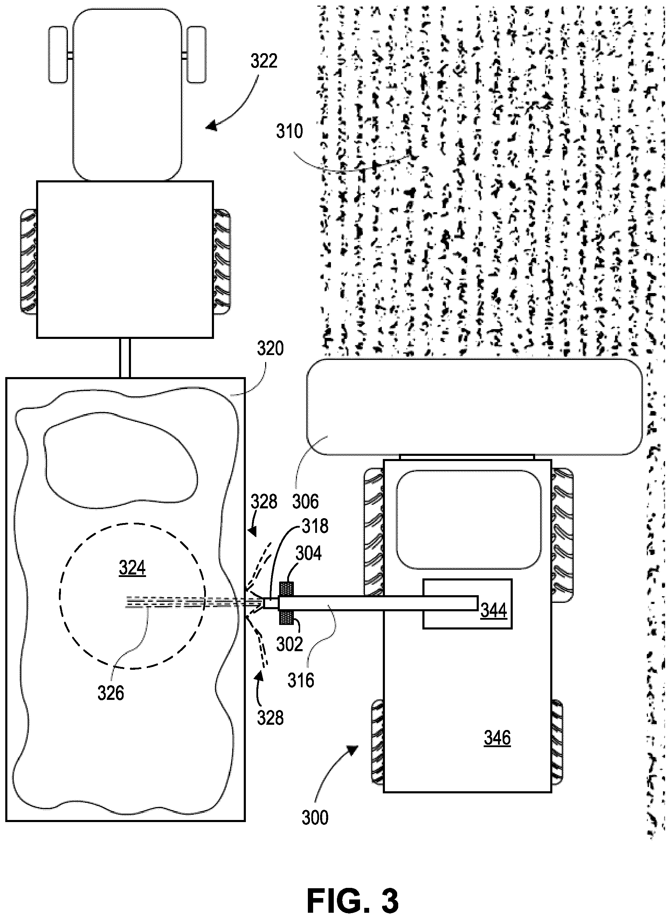

As shown in FIG. 1, each one of the farming machines includes a respective computer and respective electronics (e.g., see computing systems 116, 118, and 120, and see electronics 126, 128, and 130). In some embodiments, the electronics of a farming machine include electronic hardware and software of the farming machine such as sensors and other types of electrical and/or mechanical feedback devices that are communicatively coupled with the computer of the farming machine (e.g., see electronics 220 depicted in FIG. 2 as well as first sensor module 302 and second sensor module 304 of harvester 300 shown in FIG. 3). In some embodiments, the computer of the farming machine is configured to connect or integrate with the farming machine electronics (e.g., see electronics 126, 128, and 130) and communicate with a remote computing system (e.g., see remote computing system 102) via the communications network 104.

In some embodiments, the farming machine (e.g., see farming machine 106, 108, or 110) includes a vehicle. In some embodiments, the farming machine is a harvester such as a forage harvester or a combine harvester (e.g., see harvester 300 shown in FIG. 3). In some of such embodiments, the farming machine can be or include a vehicle in that is self-propelling. Also, in some embodiments, the group of similar farming machines is a group of vehicles (e.g., see farming machines 106, 108, and 110). In some embodiments, the group of vehicles is a group of harvesters.

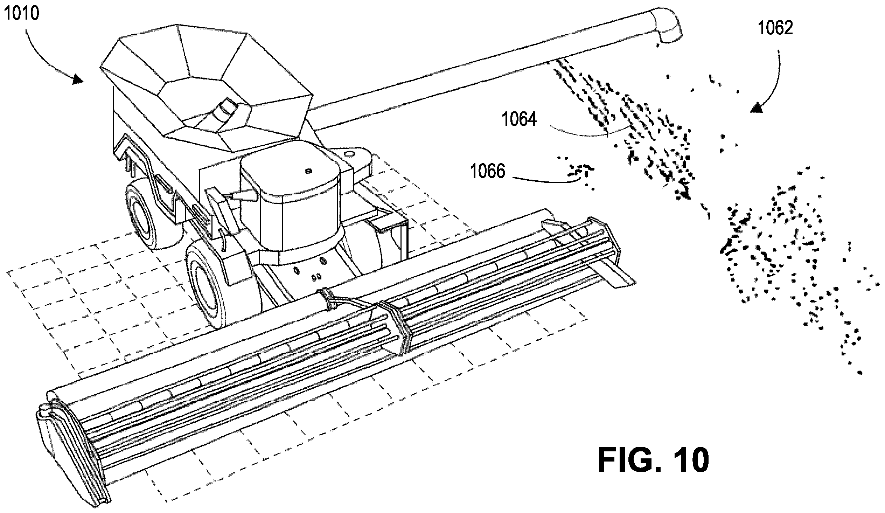

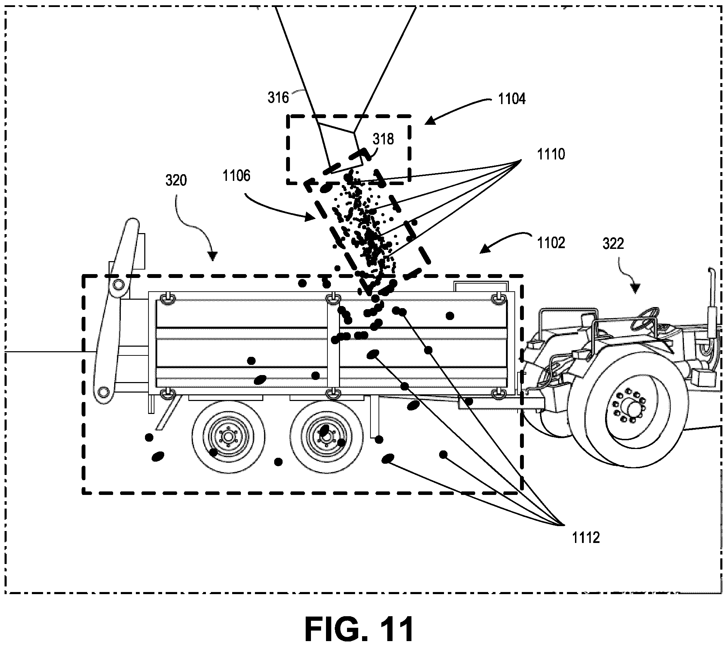

Also depicted in FIG. 1, each one of the farming machines shown has an unloading conveyor (e.g., see unloading conveyors 146, 148, and 150 as well as unloader 316). In some embodiments, a system includes an unloading conveyor configured to transfer agricultural material and one or more sensors configured to generate movement information associated with agricultural material flowing out of the unloading conveyor (e.g., see modules 302 and 304). Such systems can include a computing system (e.g., see computing system 200), configured to predict an amount of the agricultural material that is likely to flow outside of a targeted area based on the movement information. And, in response to the prediction of the computing system, the computing system is configured to generate a signal that communicates an alert that the amount of the agricultural material is likely to flow outside of the targeted area or that controls an unloading process to change direction of the flow of the agricultural material to reduce an extent that agricultural material flows outside of the targeted area. In the system, the one or more sensors include an electromagnetic detecting and ranging component (e.g., see FIG. 10 for example output of an electromagnetic detecting and ranging component). In another embodiment, the one or more sensors include an image-capturing component (e.g., see FIG. 11 for example output of an image-capturing component). -In another embodiment, the one or more sensors include an image-capturing component and an electromagnetic detecting and ranging component. E.g., see FIG. 10 for example output of an electromagnetic detecting and ranging component, and see FIG. 11 for example output of an image-capturing component.

The communications network 104 includes one or more local area networks (LAN(s)) and/or one or more wide area networks (WAN(s)). In some embodiments, the communications network 104 includes the Internet and/or any other type of interconnected communications network. The communications network 104 can also include a single computer network or a telecommunications network. More specifically, in some embodiments, the communications network 104 includes a local area network (LAN) such as a private computer network that connects computers in small physical areas, a wide area network (WAN) to connect computers located in different geographical locations, and/or a middle area network (MAN) to connect computers in a geographic area larger than that covered by a large LAN but smaller than the area covered by a WAN.

FIG. 2 illustrates a block diagram of example aspects of a computing system 200 that can implement the parts of the technical solutions described herein. Also, FIG. 2 illustrates parts of the computing system 200 within which a set of instructions are executed for causing a machine (such as a computer processor or processing device 202) to perform any one or more of the steps of the methodologies discussed herein performed by a computing system (e.g., see the method steps of the method 400 shown in FIG. 4 as well as the steps of method 500, 600, or 700). In some embodiments, the computing system 200 operates with additional computing systems to provide increased computing capacity in which multiple computing systems operate together to perform any one or more of the methodologies discussed herein that are performed by a computing system.

In some embodiments, the computing system 200 corresponds to a host system that includes, is coupled to, or utilizes memory or is used to perform the operations performed by any one of the computing systems described herein. In some embodiments, the machine is connected (e.g., networked) to other machines in a LAN, an intranet, an extranet, or the Internet. In some embodiments, the machine operates in the capacity of a server in a client-server network environment, as a peer machine in a peer-to-peer (or distributed) network environment, or as a server in a cloud computing infrastructure or environment. In some embodiments, the machine is a personal computer (PC), a tablet PC, a cellular telephone, a web appliance, a server, or any machine capable of executing a set of instructions (sequential or otherwise) that specify actions to be taken by that machine. Further, while a single machine is illustrated, the term "machine" shall also be taken to include any collection of machines that individually or jointly execute a set (or multiple sets) of instructions to perform any one or more of the methodologies discussed herein performed by computing systems.

The computing system 200 includes a processing device 202, a main memory 204 (e.g., read-only memory (ROM), flash memory, dynamic random-access memory (DRAM), etc.), a static memory 206 (e.g., flash memory, static random-access memory (SRAM), etc.), and a data storage system 210, which communicate with each other via a bus 218. The processing device 202 represents one or more general-purpose processing devices such as a microprocessor, a central processing unit, or the like. More particularly, the processing device can include a microprocessor or a processor implementing other instruction sets, or processors implementing a combination of instruction sets. Or, the processing device 202 is one or more special-purpose processing devices such as an application-specific integrated circuit (ASIC), a field programmable gate array (FPGA), a digital signal processor (DSP), a network processor, or the like. The processing device 202 is configured to execute instructions 214 for performing the operations discussed herein performed by a computing system. In some embodiments, the computing system 200 includes a network interface device 208 to communicate over a communications network. Such a communications network can include one or more local area networks (LAN(s)) and/or one or more wide area networks (WAN(s)). In some embodiments, the communications network includes the Internet and/or any other type of interconnected communications network. The communications network can also include a single computer network or a telecommunications network.

The data storage system 210 includes a machine-readable storage medium 212 (also known as a computer-readable medium) on which is stored one or more sets of instructions 214 or software embodying any one or more of the methodologies or functions described herein performed by a computing system. The instructions 214 also reside, completely or at least partially, within the main memory 204 or within the processing device 202 during execution thereof by the computing system 200, the main memory 204 and the processing device 202 also constituting machine-readable storage media. While the machine-readable storage medium 212 is shown in an example embodiment to be a single medium, the term "machine-readable storage medium" should be taken to include a single medium or multiple media that store the one or more sets of instructions. The term "machine-readable storage medium" shall also be taken to include any medium that is capable of storing or encoding a set of instructions for execution by the machine and that causes the machine to perform any one or more of the methodologies of the present disclosure performed by a computing system. The term "machine-readable storage medium" shall accordingly be taken to include solid-state memories, optical media, or magnetic media.

Also, as shown, the computing system 200 includes a user interface 216 that includes a display, in some embodiments, and, for example, implements functionality corresponding to any one of the UI devices disclosed herein. A UI, such as UI 216, or a UI device described herein includes any space or equipment where interactions between humans and machines occur. A UI described herein allows the operation and control of the machine from a human user, while the machine simultaneously provides feedback information to the user. Examples of a user interface, or UI device include the interactive aspects of computer operating systems (such as GUIs), machinery operator controls, and process controls. Also, as shown, the computing system 200 includes electronics 220 that includes that are a part of the computing system or interact directly with the computing system such as any one of the sensors described herein or controller hardware that is at least partially controlled by input generated via instructions 214, or control instructions 230 specifically.

Also, as shown in FIG. 2, the instructions 214 include spillage detection instructions 222, data linking and recording instructions 224, visualization instructions 228, and control instructions 230. The processing device 202 is configured to execute spillage detection instructions 222 for performing the operations discussed herein related to the detection of spillage during a harvesting process that includes the unloading of a harvested crop. Such operations can include computing operations performed by one or more of the sensors to generate movement information described herein. Also, such operations can include computing operations performed by a computing system such as the prediction of an amount of the agricultural material that is likely to flow outside of a target area based on the movement information. Further, such operations can include computing operations performed by a computing system such as the generating of a signal that communicates an alert that the amount of the agricultural material is likely to flow outside of the target area or that controls an unloading process to change direction of the flow of the agricultural material to reduce an extent that agricultural material flows outside of the target area. Also, the spillage detection instructions 222 and the control instructions 230 can be executed together to generate the signal that controls an unloading process to change the direction of the flow of the agricultural material to reduce the extent to which agricultural material flows outside of the target area. Further, the spillage detection instructions 222 and the visualization instructions 228 can be executed together to generate the signal that is used to alert visually that the amount of the agricultural material is likely to flow outside of the target area visually.

In some embodiments, the computing system 200 can record spillage events with corresponding GNSS references based on a geographic location tracked by a GNSS system or a location tracking system in general, e.g., see location tracking 215, as well as via a data logging system implemented through data linking and recording instructions 224. And, such information can be used by the computing system to render a spillage map to be displayed on a GUI via the visualization instructions 228.

FIG. 3 illustrates the harvester 300 harvesting crop and transferring a stream of processed crop to a receiving vehicle (such as a wagon pulled by a tractor). The harvester 300 is a forage harvester but it will be understood by those skilled in the art that principles of the present can be applied to other types of harvesters including combine harvesters. The harvester 300 has a header 306 suitable for harvesting a crop. The header 306 is provided for cutting or picking up the crop off the ground and directing it to a crop processing system (not depicted). From the crop processing system the processed crop material is transferred by an unloader 316 (which has an unloading conveyor and a discharge chute) into a receiving vehicle, such as a wagon 320 pulled by a tractor 322. Furthermore, the unloader 316, at the end of its chute, has a spout 318. In operation, the harvester 300 advances through a field cutting the crop 310 standing in the field and processes the crop. The processed crop 326 is transferred from the harvester 300 to the wagon 320 by way of the unloader 316 and the spout 318. A stream of processed crop 326 is transferred through the unloader 316 into the wagon 320 as shown in FIG. 3 and some spillage can occur (e.g., see the spillage 328) when the unloader attempts to transfer the crop to a targeted area 324 of the wagon 320. In FIG. 3, the targeted area 324 is shown by a circle drawn with a dashed line. The tractor 322 and wagon 320 can follow the harvester 300 through the field, as shown. Also, the unloader 316 includes a base portion 344 attached to a main body portion 346 of the harvester.

The harvester 300 includes an unloading conveyor in its unloader 316, electronics such as an onboard electronic system with sensors and a control system, and the computing system similar to the farming machine 106 with computing system 116, electronics 126, and unloading conveyor 146 depicted in FIG. 1. In some embodiments, the harvester includes a controller (e.g. see electronics 220 and instructions 230), position determining device (see location tracking 215), user interface, sensors, actuators, storage components, input/output ports, a communications gate, and multiple sensors for capturing data related to the spillage and the transferring of the crop being unloaded (e.g., see sensor modules 302 and 304). The sensor modules 302 and 304 each can include one or more image-capturing modules (such as modules including one or more cameras) or electromagnetic detecting and ranging modules (such as modules including one or more LIDAR or radar systems). Also, the sensor modules 302 and 304 each can include a respective image-capturing component, a respective electromagnetic detecting and ranging component, or a combination thereof along with corresponding one or more computing devices, to detect and track the transferring of the processed crop 326, the targeted area 324, the wagon 320, or a combination thereof depending on the embodiment.

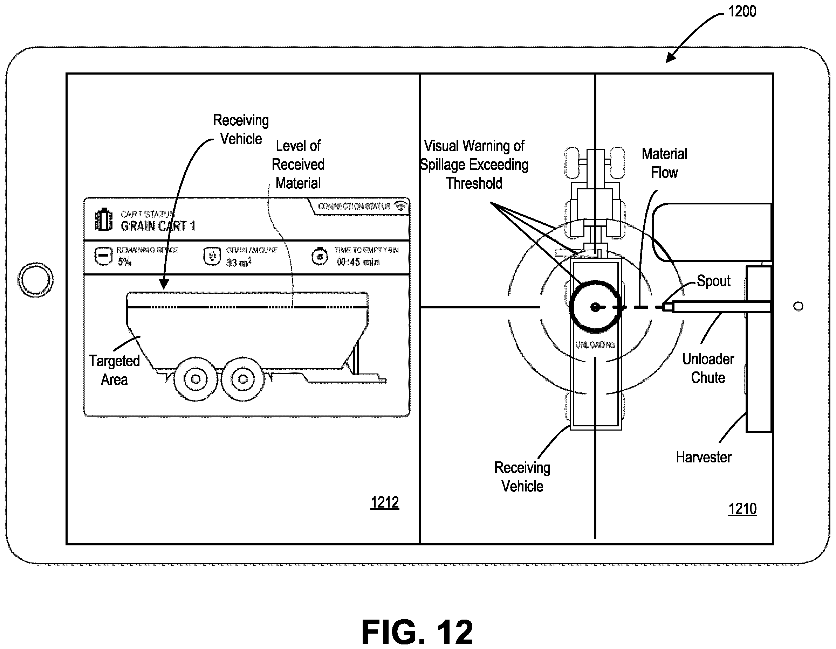

The data collected by the sensor modules 302 and 304 can be used to determine information related to spillage or a spillage event and control parts of the harvest 300 or the tractor 322 to reduce the spillage or prevent the spillage event or lessen it, or to generate, by a computing system, a graphical representation of the unloader 316 of the harvester 300 and the receiving vehicle that is presented to an operator of either the harvester 300 or the tractor 322 by way of a GUI, e.g., see GUI 1200 as shown in FIG. 12. Also, the data collected by the sensor modules 302 and 304 can be used to generate guidance data used by at least one of the harvester 300 and the receiving vehicle to automatically guide at least one of the vehicles to maintain proper alignment of the unloader 316 with the receiving vehicle. The respective control systems of the vehicles can provide such automation (e.g., see electronics 126 shown in FIG. 1 or electronics 220 and control instructions 230 depicted in FIG. 2). As used herein, an "unload operation" or the like includes transferring processed crop from a harvester to a wagon as illustrated in FIG. 2 for example.

FIGS. 4 to 7 illustrate methods in accordance with some embodiments of the present disclosure. Methods 400, 500, 600, and 700 of the corresponding figures are performed by an unloading conveyor of a farming machine (such as a harvester, e.g., see harvester 300 shown in FIG. 3), one or more sensors (e.g., see electronics 126, 128, 130, or 220 depicted in FIGS. 1 and 2 respectively), and a computing system (e.g., see computing system 102, 116, 118, 120, or 200 shown in FIGS. 1 and 2 respectively). In some systems of the technologies disclosed herein, any steps performed by the computing system of embodiments of the methods described herein are implementable by executing instructions corresponding to the steps, which are stored in memory (such as the instructions 214 shown in FIG. 2).

As shown in FIG. 4, method 400 begins with step 402, which includes transferring agricultural material by using an unloading conveyor of a farming machine (e.g., see unloading conveyor 146, 148, or 150 shown in FIG. 1). The unloading conveyor can include or be a part of an unloader in some examples (e.g., see unloader 316 shown in FIG. 3). At step 404, the method 400 includes generating movement information associated with agricultural material flowing out of the unloading conveyor by using one or more sensors (e.g., see electronics 126, 128, 130, or 220 depicted in FIGS. 1 and 2 respectively). In some embodiments, the movement information includes location data and velocity data of at least one particle of the agricultural material. In some embodiments, the one or more sensors include one or more sensor modules (e.g., see first sensor module 302 and second sensor module 304 shown in FIG. 3).

At step 406, the method 400 includes predicting, by a computing system, an amount of the agricultural material that is likely to flow outside of a targeted area (e.g., see processed crop 326 and targeted area 324 shown in FIG. 3) based on the movement information. At step 408, the method 400 continues with, in response to the prediction at step 406, generating, by the computing system, a signal that communicates an alert that the amount of the agricultural material is likely to flow outside of the targeted area (e.g., see the visual alert shown in FIG. 12) or that controls an unloading process to change direction of the flow of the agricultural material to reduce an extent that agricultural material flows outside of the targeted area. In other words, at step 408, the method includes generating, by the computing system, a signal that communicates an alert that a certain amount of spillage is occurring (e.g., see spillage 328 shown in FIG. 3) or that controls an unloading process to change the direction or speed of the flow of the agricultural material to reduce an extent of the spillage.

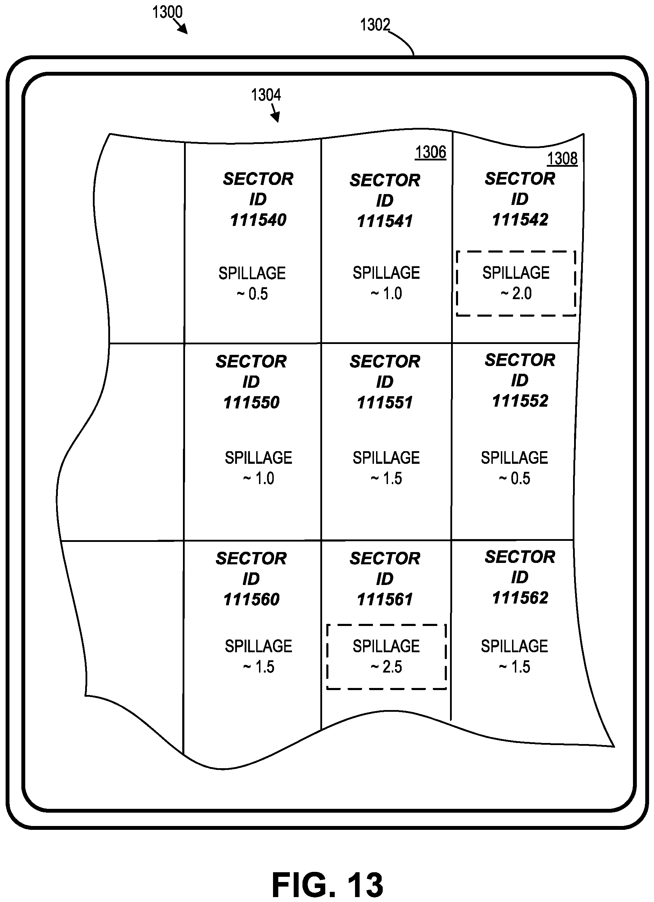

In some embodiments, the computing system can record spillage events with corresponding GNSS references based on a geographic location tracked by a GNSS system or a location tracking system in general (e.g., see location tracking 215) via a data logging system (e.g., see data linking and recording instructions 224). This data can later be used for performance analysis and process improvement. For example, an FMIS map can be generated showing levels of spillage throughout a crop field based on the recorded spillage events with corresponding GNSS references (e.g., see instructions 228 as well as FIG. 13). Also, the computing system can transfer the recorded spillage data to a cloud-based platform to facilitate broader scale data analysis and remote operation monitoring. For example, the logged data can be sent to a cloud-based platform via a network (such as network 104) for further analysis and statistical overview, for example, and can be communicated to farming machine controller hardware (e.g., see electronics 220) after or before additional control determinations by the computing system (e.g., see control instructions 230).

Specifically, at step 410, the method 400 includes a positioning device (e.g., see location tracking 215) detecting a geographic location of the farming machine within a crop field. At step 412, the method 400 continues with the computing system associating a geographic location determined from the positioning device with a spillage event that includes the amount of the agricultural material that is likely to flow outside of the target area (e.g., see data linking and recording instructions 224). At step 414, the method 400 continues with the computing system generating an FMIS map based on multiple iterations of the association of a detected geographic location with a spillage event (e.g., see visualization instructions 228 as well as FIG. 13).

In some examples of step 406, the method 400 includes determining, by the computing system, from the movement information that at least a portion of the agricultural material will flow outside of a targeted area. In such examples, step 408 includes, in response to determining that the at least a portion of the agricultural material will flow outside of the targeted area, generating, by the computing system, a signal for communicating an alert to a user that the at least a portion of the agricultural material will flow outside of the targeted area or for controlling an unloading process to direct the flow of the agricultural material to the targeted area to limit spillage.

As shown in FIG. 5, method 500 begins with step 402, which includes transferring agricultural material by using an unloading conveyor of a farming machine. However, in method 500, step 404 is replaced with step 504. At step 504, the method 500 includes generating movement information associated with agricultural material flowing out of the unloading conveyor by using an electromagnetic detecting and ranging component (e.g., see electronics 126, 128, 130, or 220 depicted in FIGS. 1 and 2 respectively). In some embodiments, the movement information includes location data and velocity data of at least one particle of the agricultural material. In some embodiments, the electromagnetic detecting and ranging component includes one or more electromagnetic detecting and ranging modules (e.g., see first sensor module 302 and second sensor module 304 shown in FIG. 3).

In some embodiments, the one or more electromagnetic detecting and ranging modules or the electromagnetic detecting and ranging component includes a LIDAR system. In some examples, the LIDAR system includes a FMCW LIDAR system. In some examples, the LIDAR system includes a MTCW LIDAR system. In some examples, the LIDAR system includes a scanning LIDAR system along with an imaging radar system. To put it another way, the LIDAR system includes a scanning LIDAR system, and the one or more modules or the electromagnetic detecting and ranging component includes an imaging radar separate from the LIDAR system. In some embodiments, the scanning LIDAR and the imaging radar are time synchronized. In some embodiments, the scanning LIDAR system and the imaging radar are integrated. In some instances, the integration of the scanning LIDAR system and the imaging radar includes time synchronization.

In some embodiments, a spillage monitoring system for agricultural harvesting operations is implemented via the one or more electromagnetic detecting and ranging modules or the electromagnetic detecting and ranging component. And, such a spillage monitoring system as well as its components and modules includes sensor use. Regarding sensor use implemented via FMCW LIDAR system can use a continuous wave laser that sweeps its frequency linearly. The interference of the delayed backscattering signal of the laser with the local oscillator yields a beat note that corresponds to the distance to each particle of the harvested material. With use of a triangular waveform frequency modulation, the FMCW LIDAR system can be used to determine the Doppler shifts induced by the velocity of the particles (such as the averaged velocity of the particles), providing simultaneous positioning and speed data.

Regarding sensor use implemented via MTCW LIDAR, an MTCW LIDAR system can be used to perform single-shot simultaneous ranging and velocimetry measurements of the harvested material. If the Doppler shifts in such measurements, caused by the speed of the harvested material, exceed the optical carrier linewidth (e.g., the averaged velocity of the particles of the harvested material exceeding the optical carrier linewidth) and RF beating tones appear reducing the interference.

Regarding sensor use implemented via integration of scanning LIDAR and imaging radar, a system integrating scanning LIDAR and imaging radar can be used to enhance the precision of the electromagnetic detecting and ranging component. The scanning LIDAR captures depth information about the trajectory of the harvested material, and the imaging radar provides velocity data. In some examples, the two sensors are integrated by being time-synchronized to maintain the accuracy of tracking particles of the harvested material as they are flowing out of the unloading conveyor.

In some embodiments, using a LIDAR or radar system, or another type of system for the electromagnetic detecting and ranging component, or a combination thereof, can include performing multiple scans for particle tracking. The electromagnetic detecting and ranging component can be configured to perform multiple scans to track individual particles. An ICP method can align the data from different scans to generate a tracking mechanism for each particle of the harvested material being transferred from the farming machine.

Similar to method 400, in method 500, at step 406, the method 500 includes predicting, by a computing system, an amount of the agricultural material that is likely to flow outside of a targeted area based on the movement information (e.g., see processed crop 326 and targeted area 324 shown in FIG. 3). And, at step 408, the method 500 similarly continues with, in response to the prediction at step 406, generating, by the computing system, a signal that communicates an alert that the amount of the agricultural material is likely to flow outside of the targeted area or that controls an unloading process to change direction of the flow of the agricultural material to reduce an extent that agricultural material flows outside of the targeted area.

In some embodiments, at step 406, the computing system is configured to collect data from multiple scans of the one or more electromagnetic detecting and ranging modules or the electromagnetic detecting and ranging component and use an ICP process to align data from each of the multiple scans to track individual particles of the agricultural material.

In some embodiments, at step 504, the one or more electromagnetic detecting and ranging modules or the electromagnetic detecting and ranging component is configured to generate position, depth, and velocity data. In some cases, such as the previously mentioned example, at step 406, the computing system is configured to receive the position, depth, and velocity data from the one or more electromagnetic detecting and ranging modules or the electromagnetic detecting and ranging component, and align and process the position, depth and velocity data using an ICP process to track particles of the agricultural material. In some examples, at step 406, the computing system is configured to determine that at least a portion of the agricultural material will flow outside of a targeted area by analyzing the trajectory and velocity of each of the particles to determine whether each of the particles will flow outside of the targeted area.

In some embodiments, at step 504, the one or more electromagnetic detecting and ranging modules or the electromagnetic detecting and ranging component include an FMCW LIDAR system, an MTCW LIDAR system, a scanning LIDAR system, and an imaging radar system. In some cases, such as in the previously mentioned example, at step 406, the computing system obtains position data and first velocity data from the FMCW LIDAR system, and the MTCW LIDAR system obtains depth data and second velocity data from the scanning LIDAR system and the imaging radar system as well as aligns and processes the position data, the first velocity data, the depth data, and the second velocity data using an ICP process. This results in a precise tracking of each harvested material particle throughout the unloading process.

In some embodiments, an FMCW LIDAR system, an MTCW LIDAR system, a scanning LIDAR system, and an imaging radar system (which can be time synchronized with the LIDAR systems) interact with the computing system at step 406. Initially, the computing system can receive position and speed data from the FMCW and MTCW LIDAR systems at step 406. Also, the computing system can obtain additional depth and velocity information from the scanning LIDAR and imaging radar systems simultaneously, at step 504. In some of such examples, the computing system aligns and processes the data from the four sources using an ICP process, at step 406. The ICP process outputs a precise tracking of each harvested material particle throughout the unloading process based on the respective inputs from the four sources of movement data, at step 406. After the ICP process, the computing system can apply a predefined spillage detection process configured to determine trajectory and velocity information for each particle of the harvested material to determine if it will land in the target (such as the intended trailer) or if it is likely to result in a spillage event, at step 406.

In some cases, if a spillage event is detected, the computing system triggers an alert via a human-machine interface (e.g., see user interface 216) and records the event with a corresponding GNSS reference based on a geographic location tracked by a GNSS system or a location tracking system in general (e.g., see location tracking 215) via a data logging system (e.g., see data linking and recording instructions 224), at step 408. The logged data can be sent to a cloud-based platform via a network (such as network 104) for further analysis and statistical overview, for example, and can be communicated to farming machine controller hardware (e.g., see electronics 220) after or before additional control determinations by the computing system (e.g., see control instructions 230), at step 408.

As shown in FIG. 6, method 600 begins with step 402, which includes transferring agricultural material by using an unloading conveyor of a farming machine. However, in method 600, step 404 is replaced with step 604. At step 604, the method 500 includes generating movement information associated with agricultural material flowing out of the unloading conveyor by using an image-capturing component (e.g., see electronics 126, 128, 130, or 220 depicted in FIGS. 1 and 2 respectively). In some embodiments, the movement information includes location data and velocity data of at least one particle of the agricultural material. In some embodiments, the image-capturing component includes one or more camera modules (e.g., see first sensor module 302 and second sensor module 304 shown in FIG. 3).

In some embodiments, the image-capturing component generates movement information associated with agricultural material flowing out of the unloading conveyor, at step 504. In some cases, at step 406, the computing system determines from the movement information or corresponding image data that at least a portion of the agricultural material will flow outside of the targeted area, and, at step 408, in response to determining that the at least a portion of the agricultural material will flow outside of the targeted area, generates a signal for communicating an alert to a user of a spillage event or for controlling the unloading process to direct the flow of the agricultural material to the targeted area to reduce or eliminate spillage of the spillage event.

In some embodiments, the image-capturing component includes a stereo camera system positioned to capture image data corresponding to an outlet of the unloading conveyor and a targeted area. In some embodiments, the stereo camera system includes at least three cameras to reduce the parallax effect in the image data. In some embodiments, the stereo camera system is configured to generate movement information associated with the agricultural material flowing out of the unloading conveyor based on the image data. The movement information can include location data and velocity data of at least one particle of the agricultural material. In some embodiments, at step 406, the computing system determines the movement and speed of individual particles of the agricultural material based on the movement information to determine that the at least a portion of the agricultural material will flow outside of the targeted area.

In some embodiments, the computing system determines, at step 406, the movement and speed of individual particles of the agricultural material to determine that the at least a portion of the agricultural material will flow outside of the targeted area. In some embodiments, at step 406, the computing system estimates optical flow between successive camera frames of the image data to determine the movement and speed of the individual particles of the agricultural material. In some embodiments, at step 406, the computing system uses a robust aligned feature transform process to estimate the optical flow between successive camera frames. In some embodiments, at step 406, the computing system uses a scene flow process to combine depth information from the image data and optical flow data outputted by the robust aligned feature transform process to generate a three-dimensional motion analysis of the individual particles.

In some embodiments, the image-capturing component uses a multi-camera setup at step 604 and the computing system uses image processing and analysis for tracking harvested material during the unloading process at step 406. The image processing and analysis can provide real-time spillage detection and enhance spillage mitigation at step 408. In some cases, the multi-camera setup includes using a stereo camera configuration. The configuration can include a dual camera or a tri-camera configuration. The configuration can include cameras being positioned at different parts of the harvester to monitor the movement of the material from the unloading device to the designated landing area. The multi-camera setup can be configured to capture depth information and generate a 3D spatial representation of the harvested material being unloaded from the unloader of a farming machine such as a harvester.

The image processing and analysis can include the use of a robust aligned feature transform (RAFT) process at step 406. Such a process estimates optical flow between successive camera frames. The RAFT process determines the movement and speed of individual particles of the harvested material based on the estimated optical flow. And, the determined movement and speed of particles provide data as input for spillage detection. In some examples, scene flow processes are used at step 406 to enhance the functionality of the RAFT process. Also, in some examples, a scene flow process combines depth information captured from the multi-camera setup and optical flow data from the RAFT process. The aforesaid combination process provides a comprehensive 3D motion analysis of each particle, which can enhance the precision of particle tracking and enable landing point predictions; and thus, can provide spillage detection. To put it another way, data captured by multiple cameras at step 604 is forwarded to a computer processing unit for analysis at step 406. The computing system uses the RAFT process at step 406 to determine optical flow between camera frames, which provides detailed data on the movement and speed of the particles of the material being unloaded. Then, scene flow processes at step 406 integrate this optical flow data with depth information, creating a 3D motion map of each particle. The analysis allows the computing system to detect spillage events. If the determined trajectory of a particle shows that it will not land in the intended trailer at step 408, the computing system can trigger an alert that can be sent to a human-machine interface (e.g., see user interface 216).

As shown in FIG. 7, method 700 begins with step 402, which includes transferring agricultural material by using an unloading conveyor of a farming machine. However, in method 700, step 404 is replaced with step 704. At step 704, the method 500 includes generating movement information associated with agricultural material flowing out of the unloading conveyor by using an electromagnetic detecting and ranging component and an image-capturing component (e.g., see electronics 126, 128, 130, or 220 depicted in FIGS. 1 and 2 respectively). In some embodiments, the movement information includes location data and velocity data of at least one particle of the agricultural material. In some embodiments, the electromagnetic detecting and ranging component includes one or more electromagnetic detecting and ranging modules (e.g., see first sensor module 302 and second sensor module 304 shown in FIG. 3). In some embodiments, the image-capturing component includes one or more camera modules (e.g., see first sensor module 302 and second sensor module 304 shown in FIG. 3).

In some embodiments, the image-capturing component includes an image sensor capturing image data corresponding to an outlet of the unloading conveyor and a targeted area at step 704. In some embodiments, the electromagnetic detecting and ranging component includes an electromagnetic detecting and ranging module capturing ranging data corresponding to the outlet of the unloading conveyor and the targeted area at step 704. In such examples, the predicting, by the computing system, an amount of the agricultural material that is likely to flow outside of a targeted area, at step 406, is based on the captured image data and the captured ranging data. In such cases, in response to the prediction, step 408 includes generating, by the computing system, a signal that communicates an alert that the amount of the agricultural material is likely to flow outside of the targeted area or that controls an unloading process to change the direction of the flow of the agricultural material to reduce an extent that agricultural material flows outside of the targeted area.

In some embodiments, the predicting the amount of the agricultural material that is likely to flow outside of the targeted area, at step 406, includes identifying the agricultural material moving between the outlet of the unloading conveyor and the targeted area using the captured image data, and determining a location of the agricultural material moving between the outlet of the unloading conveyor and the targeted area using the captured ranging data.

In some embodiments, the predicting the amount of the agricultural material that is likely to flow outside of the targeted area, at step 406, includes enhancing the captured image data by performing image segmentation on the captured image data to identify the agricultural material moving between the outlet of the unloading conveyor and the targeted area. In some cases, the image segmentation on the captured image data includes semantic segmentation on the image data.

In some embodiments, the predicting the amount of the agricultural material that is likely to flow outside of the targeted area, at step 406, includes temporally merging the enhanced image data and the captured ranging data.

In some embodiments, the predicting the amount of the agricultural material that is likely to flow outside of the targeted area, at step 406, includes deriving second image data from the captured ranging data and enhancing the derived second image data by performing image segmentation on the derived second image data to identify the agricultural material moving between the outlet of the unloading conveyor and the targeted area.

In some embodiments, the predicting the amount of the agricultural material that is likely to flow outside of the targeted area, at step 406, includes temporally merging the enhanced image data and the enhanced and derived second image data. In some embodiments, the predicting the amount of the agricultural material that is likely to flow outside of the targeted area, at step 406, includes using the merged data to detect an edge of a receiving vehicle, and defining the targeted area using the detected edge of the receiving vehicle. In some embodiments, the predicting the amount of the agricultural material that is likely to flow outside of the targeted area, at step 406, includes using the merged data to detect the agricultural material moving between the outlet of the unloading conveyor and the targeted area and distinguish it from other objects such as the receiving vehicle.

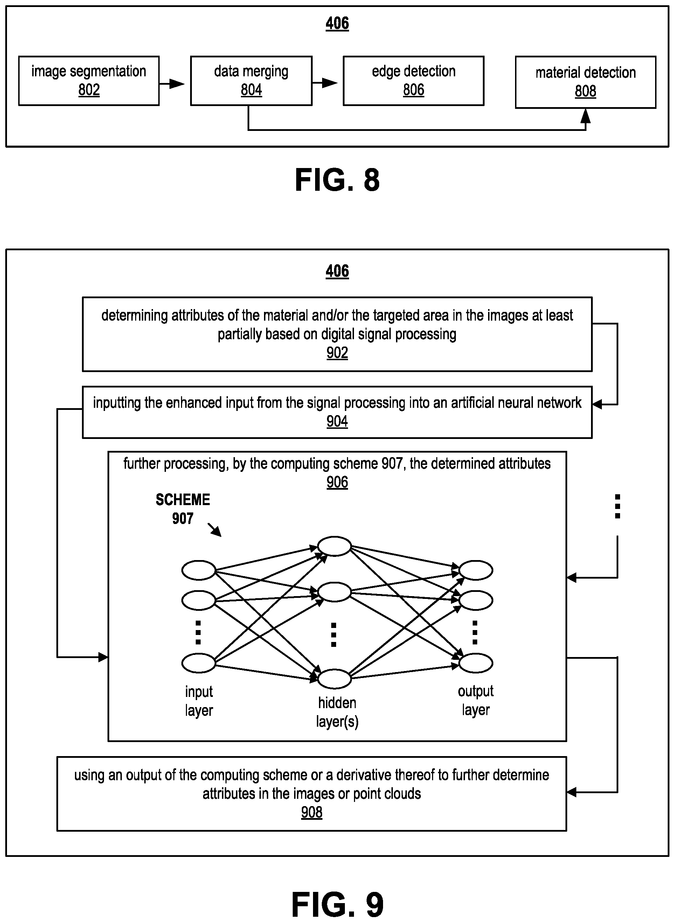

Some embodiments include using at least a camera and a LIDAR system to capture and generate movement information at step 704. In such cases, a camera and LIDAR sensor mounted on a farming machine (such as a harvester) monitor the trajectory of the harvested material from the unloading device to a targeted area such as the receiving area of a trailer. The camera captures visual information, while the LIDAR sensor collects depth and positional data of the material. After the movement information is generated, the computing system can be the primary hub for data analysis in step 406. At step 406, the computing system can execute complex processes that analyze, segment, and merge data from the camera and LIDAR to track material movement, detect the edges of the trailer, and identify potential spillage instances. For example, as illustrated by FIG. 8, the computing system can run a processing pipeline in step 406 to predict the spillage. The pipeline includes image segmentation at step 802, data merging at step 804, edge detection at step 806, and material detection at step 808.

In some embodiments, at step 802, the image segmentation can include any version of the image segmentation or the semantic segmentation described herein. In some examples, image segmentation can include the process of segmenting a captured image into distinct categories such as "trailer", "material in the air", "unloading device", and "material in the trailer". This step provides a clear differentiation between the various elements within the unloading process.

In some embodiments, at step 804, the data merging can include any version of the merging of sensed data described herein. In some examples, the data merging can include the segmented camera data and raw LIDAR data being temporally merged for each corresponding instance in time. In some examples, the merging can result in an enhanced point cloud. The merged data can provide a detailed spatial representation of a scene, allowing for precise tracking of the unloading of material as well as effective spillage detection.

In some embodiments, at step 806, the edge detection can include any version of edge detection described herein. In some examples, the edge detection can include using the enhanced point cloud as a basis for detecting edges of a trailer for receiving the unloaded material. The edge detection can establish the boundaries within which the harvested material should land. In some embodiments, at step 808, the material detection can include any version of harvested material detection described herein. In some examples, the material detection includes identifying the material in the air using the point cloud data. And, by distinguishing the harvested material from other elements in a scene, the material detection process at step 808 can accurately track the trajectory and speed of the material being transferred.

From the results of the pipeline shown in FIG. 8, the computing system can evaluate whether a spillage event occurs and the extent of the event. In other words, the system can evaluate whether any material particles are likely to fall outside the boundaries of a targeted area (such as the receiving area of a trailer). In some embodiments, additional processes such as point-in-polygon determinations can be used to determine if a particle is outside the edges of a targeted area. In such instances where a certain amount of particles are predicted to land outside of the targeted area, the computing system can alert an operator via a human-machine interface (e.g., see user interface 216 shown in FIG. 2). Also, for example, each detected spillage event can be logged with its corresponding GNSS reference. Then such data can be used later for operator performance analysis, and process improvement, and can be forwarded to a cloud-based platform for broader-scale analysis and remote operation monitoring. Also, a map can be generated showing the extent of spillage per sector of a field.

FIG. 9, which shows a sub-method of step 406 in some embodiments, illustrates a data processing method for spillage detection that includes digital signal processing and a trained computing scheme. In some embodiments, at step 406, the computing system can execute complex processes that include running signal processing procedures and computer visional analysis on data from the one or more sensors (such as data from a camera and a LIDAR system) to enhance tracking material movement, detect the edges of the targeted area, and identify potential spillage instances (e.g., see steps 902 to 908). In some examples of the methods, the determination of the attributes of the moving harvested material and the targeted area is based at least partially on digital signal processing (e.g., see step 902 of step 406). In some instances, the digital signal processing occurs prior to the computer vision analysis as a pre-processing step to generate enhanced input for the computer vision analysis (e.g., see steps 902 and 904 of step 406). Also, even more specifically, in such cases, the computer vision analysis includes inputting the enhanced input into an artificial neural network (ANN) (e.g., see scheme 907 and step 904), and the determination of the attributes of the moving harvested material and the targeted area in the data is based at least on output of the ANN (e.g., see steps 906 and 908 of step 406). For example, at step 902, step 402 includes determining attributes of the material and/or the targeted area in the images at least partially based on digital signal processing. Then at step 904, step 402 includes inputting the enhanced input from the signal processing into an artificial neural network. At step 906, the step 402 includes further processing, by the computing scheme 907, the determined attributes. And, at step 908, the step 402 includes using an output of the computing scheme or a derivative thereof to further determine attributes of the moving harvested material and the targeted area in the images or point clouds of the movement information.

In general, some examples include the computer vision analysis including inputting an input into an ANN (e.g., see scheme 907), and the determination of the attributes of the moving material and the targeted area the motion data or information is based at least on output of the ANN (e.g., see step 908). The ANN can include or can be a part of a deep learning process that determines attributes of the moving harvested material and the targeted area or can be a basis for the determination of the attributes of the moving harvested material and the targeted area. In such cases, the deep learning process can include a convolutional neural network (CNN) for semantic pixel-wise segmentation.

In some embodiments, an agricultural vehicle, such as a harvester, includes an RGB camera or a LIDAR system mounted near the spout of an unloader chute (e.g., see unloader 316). The view of the camera or the LIDAR system can be directed in the direction that the unloader chute unloads the material and can include a wide-angle horizontal field of view. The data or information generated by such sensors can be processed by a computing system, such as through a deep learning process for pixel-wise semantic segmentation. In some instances, SEGNET or another type of a deep convolutional encoder-decoder architecture for image or point cloud segmentation is used such as the deep-learning process U-NET (which is a network for biomedical image segmentation), also such as a fully convolutional network (FCN), DEEPLABV2 or DEEPLABV3, and DECONVNET. For an RGB input image, the deep-learning process can provide an image where each pixel is labelled as either 'harvested material', 'targeted area' or 'background', for example. Based on the known field of view of the sensor and its mounting position, the detected areas can be transformed from image frame to frame.

Also, since the farming machine can be equipped with a location tracking system or a machine position tracking system (such as RTK-GPS), the data from the machine can then be transformed into input for a vehicle control system or other types of functionality such as map generation. In some other embodiments, the one or more sensors can include an RGB camera, a grayscale camera, a CMYK camera, or any other type of camera having a different color mode than RGB, grayscale or CMYK. In some embodiments, the one or more sensors can include a LIDAR system or radar or another way of capturing data points of the field of view facing the targeted area. Also, the data points captured by a LIDAR system or radar can be converted into an image for processing using techniques similar techniques as those used for the camera-captured images.

FIG. 10 shows a perspective view of a harvester and data points collected by a LIDAR system (such as a lidar system of an electromagnetic detecting and ranging component). In this case, the LIDAR system includes a three-dimensional LIDAR scanner that generates a point cloud. An electromagnetic detecting and ranging module (e.g., see module 302 or 304) is positioned at an end of a chute of the harvester (e.g., see the chute of unloader 316) near or at the spout of the chute (e.g., see spout 318). In some embodiments, the electromagnetic detecting and ranging module includes a three-dimensional LIDAR scanner, or any one of the other LIDAR systems mentioned herein, positioned to scan or detect and range an area extending outwardly from a side surface of the harvester 1010 (or harvester 300) and with a center of- the scan area being perpendicular or approximately perpendicular to the longitudinal axis of the harvester. This corresponds to an area in which a receiving vehicle is located during crop transfer operations. The module generates a plurality of data points constituting a point cloud representative of points on surfaces within a scan area or detected area, including points on surfaces of the receiving vehicle, the ground, and other objects within the scan area. A portion of a point cloud 1062 is depicted in FIG. 10 illustrating some of the data points corresponding to the receiving vehicle and a tractor pulling the receiving vehicle. A computing system (e.g., see computing system 200) receives the data generated by the module and uses the data to detect the presence of the receiving vehicle and to determine the location of the receiving vehicle relative to the harvester 1010. To detect the presence of the receiving vehicle, the computing system processes the data received from the module to determine whether one or more features or characteristics of the receiving vehicle are present in the data. The point cloud 1062 illustrates various features of the receiving vehicle that can be reflected in the data collected by the module. A pattern 1064 in the point cloud 1062 corresponding to an exterior side surface of the receiving vehicle is visible including a front edge, a top edge, a rear edge, and a bottom edge of the surface shown in the pattern 1064. A second pattern 1066 in the point cloud 1062 corresponds to harvested material being transferred to the receiving vehicle that is outside of the representation of the receiving vehicle and that can be interpreted as a spillage event.

FIG. 11 illustrates a computer-generated image of a receiving vehicle and a tractor pulling the receiving vehicle as well as material being unloaded from a harvester and the occurrence of spillage. The image can be used by a computing system described herein (e.g., see computing system 200) to predict spillage as well as validate information obtained by a LIDAR system, or vice versa. Specifically, FIG. 11 shows computer vision-generated bounding boxes 1102, 1104, and 1106 that are rectangular and graphically identify the detected image parts of the wagon 320, the spout 318 of the unloader 316 of the harvester 300, and the transferring of harvested material from the spout of the unloader to the receiving vehicle, respectively. FIG. 11 also shows a computer-generated image including the tractor 322 pulling the wagon 320 as well as particles of the harvested material being transferred from the harvester to the receiving vehicle (e.g., see moving material 1110). Also, shown are particles of the moving harvested material being unloaded and appearing to miss the targeted area and the receiving vehicle (e.g., see moving material 1112). In addition to generating and using the bounding boxes to identify the wagon 320, the spout 318 of the unloader 316 of the harvester 300, and the transferring of harvested material from the spout of the unloader to the receiving vehicle, the computing system can also identify particles of the moving material outside of the bounding box 1106 and determine or predict and label the particles as moving material likely to land outside the targeted area or agricultural material that will flow outside of the targeted area.

In some examples, the computing system processes the data captured by the one or more sensors (e.g., sensors of an imaging component or an electromagnetic detecting and ranging component) to identify the presence of transferring agricultural material, spillage, and vehicle parts that approximately match the anticipated shape, size, angle and/or location of such objects and events (e.g. see the captured features identified and then generated graphically by the computing system shown in FIGS. 10 and 11). It does this by looking for a pattern in the point cloud or image corresponding to such objects and events. Once it detects such objects and events it can process the data to identify additional features or patterns that correspond to such objects and events. The computing system can use preexisting data sets corresponding to the particular receiving vehicles, moving material, spillage, etc. to identify patterns from the data acquired by the electromagnetic detecting and ranging component or the imaging component. The computing system can use the data from the one or more sensors of such components to determine the orientation and the dimensions of the receiving vehicle, the moving material, spillage, etc. Using data from a point cloud or an image, for example, the computing system determines whether its features correspond to such objects and events. Also, in some examples, the computing system can use the dimensions of the receiving vehicle in determining where the spout of the unloader is located relative to the edges of the bin of the receiving vehicle to accurately predict spillage and spillage events as well as generate related information such as approximations of the targeted area, moving material, moving material likely to land outside the targeted area, position of the unloader, position of the receiving vehicle, etc. The information generated from the point cloud or the image can be used by the computing system for reducing spillage--such as by the system generating corresponding GUIs or FMIS maps for operators (e.g., see FIGS. 12 and 13) or by the system controlling the machines directly, e.g., control via updates to longitudinal offsets of the receiving vehicle and the harvester which can lead to changes in the speed, direction, positioning of the receiving vehicle and the harvester as well as the unloader of the harvester.

FIG. 12 shows a GUI 1200 displayed on an electronic device depicting the unloading of agricultural material as well as a visual alert of an amount of spillage exceeding a threshold. Area 1210 of the GUI 1200 graphically indicates material flowing out of a spout of an unloader chute of a harvester as well as a receiving vehicle receiving the flowing material being unloaded. The visual alert or warning of the excessive spillage of the harvested material is graphically shown as a group of circles centered in a targeted area of the receiving vehicle and is one of many ways to graphically warn a user of exceeding a spillage threshold. In some embodiments, the concentric target lines of the visual warning that appear to be centered at the end of the material flow can be accompanied with a complementary audio warning. The area 1210 of the GUI 1200 provides visual information to the operator of the harvester so that the operator can direct the harvester or the tractor pulling the receiving vehicle to reduce spillage upon receiving the alert. Specifically, the area 1210 shows crop being dispensed from the spot of the chute to assist the operator in aligning the end of the crop flow with a position in the bin of the receiving vehicle. The Area 1212 of the GUI 1200 shows the receiving vehicle, a side view of the targeted area within the vehicle, and the level of the harvested and received crop material.

FIG. 13 illustrates display 1302 of user interface device 1300. The display 1302 is shown displaying a spillage map 1304. The map 1304 provides estimated spillage that occurs from transferring of agricultural material from a harvester to a receiving vehicle in different locations of a crop field. As shown in FIG. 13, each defined sector of the map 1304 includes a respective identification number and an estimated spillage score, which in some examples can be derived from a ratio of material being transferred from a harvester to a receiving vehicle that represents a predicted amount of material to land within a targeted area of the receiving vehicle relative to a predicted amount that lands outside of the targeted area. Also, the map 1304 provides indicators that graphically represent when spillage is above an acceptable standard or exceeds a threshold. In the case of the map 1304, the acceptable or selected amount of spillage is represented by a score of 1.5 (wherein 1.5 is an example of a threshold value). The indicators in the map 1304 are shown by a dashed-line rectangle that contains the corresponding spill score that exceeds the threshold of 1.5. As shown, for example, sector 1306 includes a spillage value at an acceptable level. Whereas, sector 1308 includes a spillage value that is above an acceptable or selected level and thus the spillage value is below an acceptable or selected level as well.

As shown in FIG. 13, a spillage map 1304 shows the estimated amount of spillage for each defined sector in a crop field (e.g., see sectors 1306 and 1308). This is important because being able to trace estimated spillage of harvested crops provides a significant agronomic value. In some embodiments, the map 1304 is combined with a yield map. The advantage of such a combination is that it provides additional information on the possible factors for the estimated spillage per sector. In some examples, the map 1304 is combined with different types of agriculture informational maps such as a topographical map, a soil quality map, a soil moisture map, a soil pH-level map, or a crop or carbon density map. Such combined maps are then useable to analyze a crop, its field, and harvesting of the crop to possibly improve farming practices.

Some portions of the preceding detailed descriptions have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a predetermined result. The operations are those requiring physical manipulations of physical quantities. Usually, though not necessarily, these quantities take the form of electrical or magnetic signals capable of being stored, combined, compared, and otherwise manipulated. It has proven convenient at times, principally for reasons of common usage, to refer to these signals as bits, values, elements, symbols, characters, terms, numbers, or the like. It should be borne in mind, however, that these and similar terms are to be associated with the appropriate physical quantities and are merely convenient labels applied to these quantities. The present disclosure can refer to the action and processes of a computing system, or similar electronic computing device, which manipulates and transforms data represented as physical (electronic) quantities within the computing system's registers and memories into other data similarly represented as physical quantities within the computing system memories or registers or other such information storage systems.

While the invention has been described in conjunction with the specific embodiments described herein, it is evident that many alternatives, combinations, modifications and variations are apparent to those skilled in the art. Accordingly, the example embodiments of the invention, as set forth herein are intended to be illustrative only, and not in a limiting sense. Various changes can be made without departing from the spirit and scope of the invention.

## Claims

1. A system comprising:
an unloading conveyor (316) configured to transfer agricultural material (326);
one or more electromagnetic detecting and ranging modules (302, 304) configured to generate movement information associated with the agricultural material flowing out of the unloading conveyor; and
a computing system (200), configured to:
determine from the movement information that at least a portion of the agricultural material (326) will flow outside of a target area (324); and
in response to determining that the at least a portion of the agricultural material (326) will flow outside of the target area (324), generate a signal for communicating an alert to a user that the at least a portion of the agricultural material will flow outside of the target area or for controlling an unloading process to direct the flow of the agricultural material to the target area.

2. The system as set forth in claim 1, wherein the movement information comprises location data and velocity data of at least one particle of the agricultural material (326).

3. The system as set forth in claim 1, wherein the one or more electromagnetic detecting and ranging modules (302, 304) comprise a frequency modulated continuous wave (FMCW) LIDAR.

4. The system as set forth in claim 1, wherein the one or more electromagnetic detecting and ranging modules (302, 304) comprise a multi-tone continuous wave (MTCW) LIDAR.

5. The system as set forth in claim 1, wherein the one or more electromagnetic detecting and ranging modules (302, 304) comprise a scanning LIDAR and an imaging radar.

6. The system as set forth in claim 5, wherein the scanning LIDAR and the imaging radar are time synchronized.

7. The system as set forth in claim 1, wherein the computing system (200) is configured to collect data from multiple scans of the one or more electromagnetic detecting and ranging modules (302, 304) and use an iterative closest point (ICP) process to align data from each of the multiple scans to track individual particles of the agricultural material (326).

8. The system as set forth in claim 1,
wherein the one or more electromagnetic detecting and ranging modules (302, 304) are configured to generate position, depth and velocity data, and
wherein the computing system (200) is configured to:
receive the position, depth and velocity data from the one or more electromagnetic detecting and ranging modules (302, 304), and
align and process the position, depth and velocity data using an iterative closest point (ICP) process to track particles of the agricultural material (326).

9. The system as set forth in claim 8, wherein the computing system (200) is configured to determine that at least a portion of the agricultural material (326) will flow outside of a target area (324) by analyzing trajectory and velocity of each of the particles to determine whether each of the particles will flow outside of the target area (324).

10. The system as set forth in claim 1,
wherein the one or more electromagnetic detecting and ranging modules (302, 304) comprise:
a frequency modulated continuous wave (FMCW) LIDAR;
a multi-tone continuous wave (MTCW) LIDAR;
a scanning LIDAR; and
an imaging radar, and
wherein the computing system (200) is configured to:
obtain position data and first velocity data from the FMCW LIDAR and the MTCW LIDAR; and
obtain depth data and second velocity data from the scanning LIDAR and the imaging radar,
align and process the position data, the first velocity data, the depth data and the second velocity data using an iterative closest point (ICP) process, resulting in a precise tracking of each harvested material particle throughout the unloading process.

11. A method, comprising:
transferring agricultural material (326) by using an unloading conveyor (316) (step 402);
generating movement information of agricultural material (326) flowing out of the unloading conveyor (316) by using an electromagnetic detecting and ranging component (302) (step 404, or step 504);
predicting, by a computing system (200), an amount of the agricultural material (326) that is likely to flow outside of a target area (324) based on the movement information (step 406); and
in response to the prediction, generating, by a computing system (200), a signal that communicates an alert that the amount of the agricultural material (326) is likely to flow outside of the target area (324) or that controls an unloading process to change direction of the flow of the agricultural material to reduce an extent that agricultural material flows outside of the target area (step 408).
